# EUROPEAN PATENT SPECIFICATION

(11) **EP 0 758 309 B1**
(45) Date of publication and mention of the grant of the patent: **13.06.2001**
(21) Application number: 95909241.2
(22) Date of filing: 25.01.1995
(51) Int. Cl.: C04B 24/32, C04B 24/02, C04B 111/34

(54) **CEMENT COMPOSITION**
ZEMENTZUSAMMENSETZUNG
COMPOSITION A BASE DE CIMENT

(30) Priority: 05.05.1994 US 238566
(43) Date of publication of application: 19.02.1997
(73) Proprietor: ARCO Chemical Technology, L.P., Greenville, Delaware 19807 (US)
(72) Inventor: SHAWL, Edward, T., Wallingford, PA 19086 (US); KESLING, Haven, S., Jr., Drexel Hill, PA 19026 (US)
(74) Representative: Cropp, John Anthony David
(86) International application number: US9500548
(87) International publication number: WO9530630

(56) References cited:
- EP-A- 0 373 621
- US-A- 2 932 670
- US-A- 4 547 223
- US-A- 4 828 619
- US-A- 4 946 904
- US-A- 5 174 820
- US-A- 5 181 961

## Description

### Background of the Invention

### Field of the Invention

The present invention relates to cement compositions which contain a shrinkage reducing amount of an alkyl ether derivative of an aliphatic polyhydroxy compound such as glycerin, preferably a dialkyl ether derivative and most preferably the di-t-butyl ether of glycerin.

### Description of the Prior Art

An important disadvantage of cement mortar and concrete is the tendency to shrink and crack upon setting and drying.

U.S. Patent 4,547,223 addresses this problem and suggests the use of compounds of the general formula:

RO(AO)ₙH

in which R represents a C₁₋₇ alkyl or C₅₋₆ cycloalkyl radical, A represents one or more C₂₋₃ alkylene radicals, and n is 1-10 as shrinkage reducing additives for cement.

U.S. Patent 5,174,820 suggests reducing the dry shrinkage of cement by the addition thereto of terminal alkyletherified or terminal alkylesterified compounds of polymers having -C₂H₅O- and/or -C₃H₆O- as a repetitive unit. Japan Patent Application No. 58-60293 suggests reducing dry shrinkage of cement by the addition thereto of compounds of the formula:

R₁OXₘYₙR₂

where R₁ and R₂ represent aliphatics, alicyclics or aromatics having 1 to 10 carbon atoms, X represents -CH₂CH₂O-, Y represents -CH(CH₃)CH₂O-, m and n are 0 or greater, and m + n is 1 to 15.

Ostrikov, et al., Kolloidnyi Zhumal, Vol. 27, pp 82-86 (1965) suggests the addition of anhydrous glycerin to cement. Despite the efforts of prior workers, the problem of shrinkage and crack formation in the drying and setting of cement compositions remains a serious problem.

### Brief Description of the Invention

In accordance with the present invention, it has been found that dry shrinkage and cracking of cement compositions can be significantly reduced by incorporating in the cement composition an effective amount of an alkyl ether derivative of an aliphatic polyhydroxy compound having the formula:

Q-[(A)ₙ-OR]ₓ

wherein Q is a C₃-C₁₂ aliphatic hydrocarbon group, R is hydrogen or a C₁-C₁₆ alkyl group with the proviso that at least one R is a C₁-C₁₆ alkyl group, A is a C₂-C₄ oxyalkylene group, n is 0-10, and x is 3-5.

Illustrative shrinkage reducing agents which are employed according to the invention are those having the above formula derived from C₃-C₁₂ aliphatic triols such as glycerol, 1,2,4-butanetriol, 2,3,4-petanetriol, 2-ethyl-2-(hydroxymethyl)-1, 3-propanetriol (trimethylol propane), 1,1,1-tris(hydroxymethyl)ethane, 1,2,6-trihydroxyhexane, 1,2,3-heptanetriol, and the like, C₄-C₁₂ aliphatic tetrols (eg. 2,3,4,5-hexanetetrol, sorbitan, erythritol, pentaerythritol), C₅-C₈ sugar alcohols [including those compounds corresponding to the formula HOCH₂ (CHCH)ₙCH₂OH wherein n is 3 to 6 such as xylitol, sorbitol, arabitol, mannitol, and the like], monosaccharides (eg. erythrose, threose, ribose, arabinose, xylose, lyxose, allose, altrose, glucose, mannose, gulose, idose, galactose, fructose, galactose, and the like), disaccharides (eg. sucrose, lactose, maltose) and alkyl glycosides (eg. methyl glycosides, ethyl glycosides, propyl glycosides, and other glycoside molecules wherein the alkyl glycoside is an acetal formed by interaction of a C₁-C₂₀ alcohol with a carbonyl group of a mono- or a disaccharide such as glucose). Also suitable for use as the polyol are polysaccharides such as cellulose, hydroxycellulose, chitin, guar, and starches as well as hydroxy-containing substances such as tetrahydrofuran oligomers, oxetane oligomers, sorbitol oligomers, glycerol oligomers, and the like.

Where there are more than one alkyl group represented by R above, preferably the Rs are the same alkyl group. Illustratively, R is methyl, ethyl, propyl, isopropyl, n-butyl, isobutyl, t-butyl, amyl, t-amyl, hexyl, heptyl, octyl, 2,4,4-trimethylpentyl, nonyl, decyl and the like. R is preferably a C₄-C₅ tertiary alkyl group.

Especially preferred additives employed in practice of the invention have the formula: 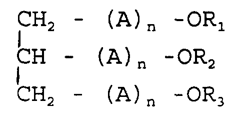 where each of R¹, R₂ and R₃ is hydrogen or a C₁-C₁₆ alkyl group with the proviso that at least one of R₁, R₂ or R₃ is a C₁-C₁₆ alkyl group, A is a C₂-C₄ oxyalkylene group and n is zero or an integer from 1-10. Preferably R₁ and R₃ are the same alkyl group, such as methyl, ethyl, propyl, isopropyl, n-butyl, isobutyl, t-butyl, amyl, t-amyl, hexyl, octyl, nonyl, decyl and the like. In one embodiment, R₁ and R₃ are C₄-C₅ tertiary alkyl groups. Most preferably, R₁ and R₃ are the same C₄-C₅ tertiary alkyl group. Where R₁ and R₃ are C₄-C₅ tertiary alkyl groups, in one embodiment, n may be zero and R₂ may be hydrogen.

Mixtures can be employed including mixtures of additives with different alkyl groups and/or different oxyalkylene groups; mixtures of 1,2 diether, 1,3 diether and 1,2,3 triether are preferred.

A can be --O-CH₂-CH₂--, 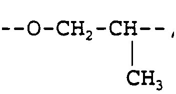 --O-CH₂-CH₂-CH₂--, 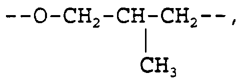 --O-CH₂-CH₂-CH₂-CH₂--, 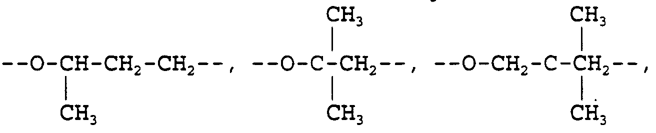 and the like; A can also be comprised of different oxyalkylene groups, e.g. both oxyethylene and oxypropylene groups.

In the case of the oxyalkylene derivatives of glycerin, preferred additives are those having the following formula: 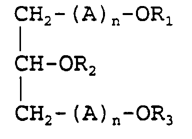 wherein R₁ and R₃ are C₁-C₁₆ alkyl groups, preferably t-butyl or t-amyl groups, R₂ is hydrogen, n is 4-10, and A is 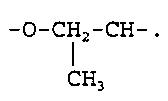 The preparation of such materials is shown, for example, in U.S. Patent 2,932,670, 2,932,616 and 4,241,224.

In a particularly preferred practice, the glycerin is etherified by reaction with isobutylene or t-butanol or the corresponding C₅ or C₆ materials, in order to produce a product mixture comprised primarily of the 1,3-di-t-alkyl ether and lesser amounts of the 1,2-di-t-alkyl ether and the 1,2,3-tri-t-alkyl ether of glycerin. Especially advantageous in this reaction is the use of a highly crosslinked sulfonic acid resin catalyst such as Amberlyst XN1010 with an isoalkane to glycerin ratio of 2:1 or higher at temperatures in the range of 40-150°C, preferably 55-75°C.

The cements with which the shrinkage-reducing agent of the invention may be used include ordinary, quick-hardening, and moderate-heat portland cements, alumina cement, blast-furnace slag cement, and flash cement. Of these, portland cements of the ordinary and quick-hardening types are particularly desirable.

The quantity of additive used may vary with factors such as the carbon number of the alkyl radical of the compound added. But the quantity of the shrinkage-reducing agent to be used in accordance with the invention is usually in the range of 0.1-10%, preferably 0.5-4%, based on the weight of cement. If the quantity is less than 0.1% by weight, the compound will give only a little shrinkage-reducing effect. If the quantity exceeds 10 wt.%, costs of the additive are excessive. The quantity of water to be used for setting the cement is not critical; generally weight ratios of water to cement in the range 0.25:1 to 0.7:1, preferably 0.3:1 to 0.5:1 are satisfactory. Where necessary, an aggregate such as pebbles, gravels, sand, pumice, or fired pearlite may be employed in conventional amounts. The quantity of the shrinkage-reducing agent is usually 0.1-10%, based on the weight of the cement, or usually 0.02-3% on the basis of the total weight of the cement, shrinkage-reducing agent, water and aggregate combined.

Advantageously, the shrinkage reducing agents of this invention are used in combination with other known shrinkage reducing agents as well as with other cement additives.

Alcohols such as C₄-C₆ aliphalic mono-alcohols, e.g. t-butyl alcohol as listed in U.S. Patent 5,181,961, can be used with the additives of this invention.

The additives listed in co-pending Application Serial No.08/191, 563 filed February 3, 1994 can be used with the additives of this invention. Such additives are mono-ether derivatives of certain dihydroxy compounds as well as mono- and di-hydric compounds such as t-butyl alcohol and dipropylene glycol. See also International Publication WO 82/03071, European 308,950 and European 573,036. Especially useful are polyoxyalkylene glycols such as polypropylene glycol having a molecular weight of about 200 - 1000.

The commercial mono-ether formulations of U.S. Patent 4,547,223 having the formula described above can be used advantageously with the additives of this invention. In general, the shrinkage reducing agents of the present invention can advantageously be used in combination with any of the shrinkage reducing agents previously known in the art.

Esters of fatty acids may be used in the formulation of the invention. Especially suitable are C₁-C₄ alkyl esters of C₄-C₂₀ fatty acids as illustrated by methyl soyate, ethyl stearate, methyl oleate, and the like.

Various other conventional ingredients may also be used. Among the optionally employable ingredients are: conventional hardening accelerators, e.g., metal chlorides such as calcium chloride and sodium chloride, metal sulfates, such as sodium sulfate, and organic amines such as triethanol-amine; ordinary hardening retarders, e.g. alcohols, sugars, starch and cellulose; reinforcing-steel corrosion inhibitors such as sodium nitrate and calcium nitrite; water reducing agents such as ligninsulfonic acid salt, as well as salts of oxycarboxylic acid and formalin condensate of naphthalenesulfonic acid; air entrainers; super plasticizers; and the like. The quantity of such an optional ingredient or ingredients is usually 0.1-6% by weight of the cement.

The manner of adding the shrinkage-reducing agent of the invention to the cement may be the same as with ordinary cement admixtures. For example, the shrinkage-reducing agent is admixed with a suitable proportion of water and then this composition is mixed with cement and aggregate. As an alternative, a suitable amount of the shrinkage-reducing agent may be added when cement, aggregate and water are mixed.

The concrete and the like incorporating the shrinkage-reducing agent according to the invention may be applied in conventional ways. For example, it may be trowelled, filled in forms, applied by spraying, or injected by means of a caulking gun. Hardening or curing of the concrete and the like may be by any of the air drying, wet air, water and heat-assisted (steam, autoclave, etc.) curing techniques. If desired, two or more such techniques may be combined. The respective curing conditions may be the same as in the past.

The addition of the shrinkage-reducing agent of the invention to the cement will markedly reduce the drying shrinkage of the resulting concrete as compared with that of the plain concrete. The admixture according to the invention when added in a large proportion (e.g., several percent), does not substantially reduce the strength of the product.

The following examples illustrate the invention.

### Example 1

Free shrinkage was determined for cement containing various additives in accordance with ASTM C-305. To a cement/water paste with 0.4 parts of water per part by weight cement was added 2 wt.% additive, and the resulting paste was formed into a 2.54 x 10⁻²m x 2.54 x 10⁻²m x 2.79 x 10⁻¹m (1" X 1" X 11") bar which was cured for 24 hours at 23°C (73°F) and 100% humidity, demolded and stored at 23°C (73°F) and 50% humidity. Measurements of shrinkage were made for 2.54 x 10⁻²m x 2.54 x 10⁻²m x 2.79 x 10⁻¹m (1" X 1" X 11") bars over a period of six weeks, and the shrinkage reduction was compared to the case when no additive was employed. The following table shows the results obtained:

**Table 1**

| | | % Shrinkage Reduction | |
|---|---|---|---|
| Additive | Wt.% | at 28 days | at 42 days |
| DTBG* | 2% | 45 | 46 |

| | | | |
|---|---|---|---|
| *A mixture of 10% 1,2-di-t-butyl glycerin, 76% 1,3-di-t-butyl glycerin, and 14% 1,2,3-tri-t-butyl glycerin by weight. | | | |

By way of contrast, where 2% by weight glycerin was used, shrinkage actually increased 77% in 21 days as compared to the no additive case, and the bar had broken by 28 days.

### Example 2

The procedure of Example 1 was repeated using a sand/cement mixture of 2 parts sand by weight per part cement, a water to cement weight ratio of 0.49/1 and employing 1% by weight based on cement of the same additive mixture used in Example 1.

After 10 days, shrinkage reduction was 38% compared with the same formulation containing no additive.

After 28 days, shrinkage reduction was 34% compared with the same formulation containing no additive.

### Example 3

Drying shrinkage cracking of cement pastes and mortar mixes was measured using the ring test method developed by Shah, et al. (ACI Materials Journal, Vol. 89, pp 289-295, 1992). A mold consisting of a 3.05 x 10⁻¹m (12") diameter, removable, carbon steel outer ring and a 2.19 x 10⁻¹m x 7.62 x 10⁻²m x 1.27 x 10⁻²m (8 5/8" OD x 3" x 1/2") thick carbon steel inner ring mounted on a 3.05×10⁻¹m (12") diameter carbon steel base plate was used for the test. Test samples were placed in the mold and cured for 6 hours at 23°C (73°F) and 100%RH, then the outer ring was removed, the top of the sample was coated with a silicone-based caulk and the ring was held at 23°C (73°F) and 50%RH and monitored for crack formation.

A typical mortar mix for a 2% additive mix was made using 1750g Type I Portland cement, 2500g sand (saturated, surface dry) and 840g water for a water to cement ratio of 0.48 and 35g additive for a 2% additive by weight on cement. The total weight of water and additive was maintained at 875g for other additive concentrations. The restrained shrinkage test is a severe measure of drying shrinkage because of the short cure time, the hoop stress of the ring, and the drying conditions.

With the use of 2wt.% DTBG, the sample cracked after 26 days, this compares favorably with a sample containing no additive which cracked after 10 days.

### Example 4

The procedure of Example 2 was repeated using an additive blend of 1% DTBG and 1% dipropylene glycol t-butyl ether based the weight of cement. Shrinkage reduction after 28 days was 43%.

### Example 5

The procedure of Example 3 was repeated using an additive blend of 0.4% DTBG and 1.6% methyl soyate based on the weight of cement. After 42 days, the sample had not cracked.

Using just 1.6% methyl soyate, no reduction in free shrinkage was observed.

### Example 6

The procedure of Example 3 was repeated using various additives as well as a control containing no additive. The control cracked after 6 days. Using 2% tertiary butyl alcohol (93% by weight in water) cracking occurred after 13 days. Using a blend of 1% DTBG and 1% of the 93% tertiary butyl alcohol, cracking occurred after 23 days.

## Claims

1. A cement composition comprised of cement and a shrinkage reducing amount of an alkyl ether derivative of an aliphatic polyhydroxy compound and having the formula:
Q-[(A)ₙ-OR]ₓ
wherein Q is C₃-C₁₂ aliphatic hydrocarbon group, each R is hydrogen or a C₁-C₁₆ alkyl group with the proviso that at least one is C₁-C₁₆ alkyl, A is a C₂-C₄ oxyalkylene group, n is 0-10, and x is 3-5.

2. A cement composition as claimed in Claim 1 characterised in that said alkyl ether derivative has the formula: 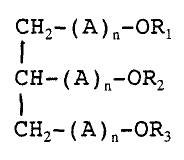 wherein each of R₁, R₂ and R₃ is hydrogen or a C₁-C₁₆ alkyl group with the proviso that at least one of R₁, R₂ and R₃ is C₁-C₁₆ alkyl, A is a C₂-C₄ oxyalkylene group, and n is 0-10.

3. A composition as claimed in Claim 2 characterised in that R₁ and R₃ are C₄-C₅ tertiary alkyl groups.

4. A composition as claimed in Claim 3 characterised in that n is 0 and, R₂ is hydrogen.

5. The composition of Claim 3 characterised in that said ether derivative has the formula: 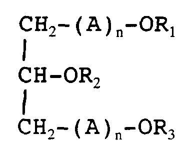 wherein R₂ is hydrogen, n is 4-10 and A is

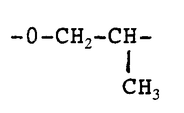

6. A composition as claimed in Claim 3, Claim 4 or Claim 5 characterised in that R₁ and R₃ are tertiarybutyl groups.

7. A composition as claimed in any one of Claims 2 to 6 and further including a polyoxyalkylene glycol having a molecular weight in the range 200-1,000.

8. A composition as claimed in any one of Claims 2 to 6 and further including an additive having the formula:
RO-(AO)ₙ-H
where R is a C₁₋₇ alkyl or C₅₋₆ cycloalkyl group, A is a C₂₋₃ alkylene radical and n is 1-10.

9. A composition as claimed in any one of Claims 2 to 8 also containing a conventional cement additive selected from hardening accelerators, hardening retarders, reinforcing steel corrosion inhibitors, water reducing agents, air entrainers, and super plasticizers.

10. A composition as claimed in any one of Claims 2 to 9 also containing water as hardening agent.

11. A composition as claimed in any one of Claims 2 to 10 containing an aggregate.

12. A composition as claimed in any one of Claims 2 to 11 also containing a C₄-C₆ aliphatic mono-alcohol.

13. A composition as claimed in any one of Claims 2 to 12 also containing a fatty acid ester additive.

## Patentansprüche

1. Zementzusammensetzung, umfassend einen Zement und eine schrumpfmindernde Menge eines Alkyletherderivats einer aliphatischen Polyhydroxyverbindung der Formel:
Q-[(A)ₙ-OR]ₓ
wobei Q eine aliphatische C₃-C₁₂-Kohlenwasserstoffgruppe darstellt, R jeweils Wasserstoff oder eine C₁-C₁₆-Alkylgruppe ist mit der Maßgabe, dass zumindest ein R C₁-C₁₆-Alkyl ist, A eine C₂-C₄-Oxyalkylengruppe ist, n 0-10 und x 3-5 ist.

2. Zementzusammensetzung nach Anspruch 1, dadurch gekennzeichnet, dass das Alkyletherderivat folgende Formel aufweist: 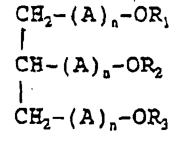 wobei R₁, R₂ und R₃ jeweils Wasserstoff oder eine C₁-C₁₆-Alkylgruppe sind mit der Maßgabe, dass zumindest einer der Reste R₁, R₂ oder R₃ C₁-C₁₆-Alkyl ist, A eine C₂-C₄-Oxyalkylengruppe ist und n 0-10 ist.

3. Zusammensetzung nach Anspruch 2, dadurch gekennzeichnet, dass R₁ und R₃ tertiäre C₄-C₅-Alkylgruppen sind.

4. Zusammensetzung nach Anspruch 3, dadurch gekennzeichnet, dass n 0 und R₂ Wasserstoff ist.

5. Zusammensetzung nach Anspruch 3, dadurch gekennzeichnet, dass das Etherderivat die Formel aufweist: 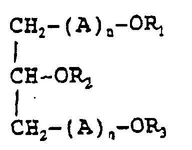 wobei R₂ Wasserstoff, n 4-10 und A 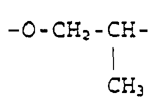 ist.

6. Zusammensetzung nach Anspruch 3, Anspruch 4 oder Anspruch 5, dadurch gekennzeichnet, dass R₁ und R₃ tertiäre Butylgruppen sind.

7. Zusammensetzung nach einem der Ansprüche 2 bis 6, weiterhin umfassend ein Polyoxyalkylenglykol mit einem Molekulargewicht im Bereich von 200-1000.

8. Zusammensetzung nach einem der Ansprüche 2 bis 6, weiterhin umfassend ein Additiv der Formel:
RO-(AO)ₙ-H
wobei R eine C₁₋₇-Alkyl- oder C₅₋₆-Cycloalkylgruppe, A ein C₂₋₃-Alkylenrest und n 1-10 ist.

9. Zusammensetzung nach einem der Ansprüche 2 bis 8, weiterhin enthaltend ein herkömmliches Zementadditiv, ausgewählt aus Aushärtungsbeschleunigern, Aushärtungsverzögerern, Betonstahl-Korrosionsinhibitoren, wasserreduzierenden Mitteln, Luftporenbildnern und Superverflüssigern.

10. Zusammensetzung nach einem der Ansprüche 2 bis 9, weiterhin enthaltend Wasser als Aushärtungsmittel.

11. Zusammensetzung nach einem der Ansprüche 2 bis 10, enthaltend ein Aggregat.

12. Zusammensetzung nach einem der Ansprüche 2 bis 11, weiterhin enthaltend einen aliphatischen C₄-C₆-Monoalkohol.

13. Zusammensetzung nach einem der Ansprüche 2 bis 12, weiterhin enthaltend ein Fettsäureesteradditiv.

## Revendications

1. Composition de ciment comprenant du ciment et une quantité réduisant le retrait d'un dérivé d'éther alkylique d'un composé polyhydroxylé aliphatique qui a la formule
Q-[(A)ₙ-OR]ₓ
dans laquelle Q est un groupe hydrocarboné aliphatique en C₃-C₁₂, chacun des R est un atome d'hydrogène ou un groupe alkyle en C₁-C₁₆, à condition qu'au moins l'un d'entre eux soit un groupe alkyle en C₁-C₁₆, A est un groupe oxyalkylène en C₂-C₄, n est un nombre de 0 à 10 et x est un nombre de 3 à 5.

2. Composition de ciment selon la revendication 1, caractérisée en ce que ledit dérivé d'éther alkylique a la formule: 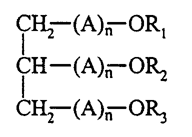 dans laquelle chacun des R₁, R₂ et R₃ est un atome d'hydrogène ou un groupe alkyle en C₁-C₁₆, à condition qu'au moins l'un des R₁, R₂ et R₃ soit un groupe alkyle en C₁-C₁₆, A est un groupe oxyalkylène en C₂-C₄ et n est un nombre de 0 à 10.

3. Composition selon la revendication 2, caractérisée en ce que R₁ et R₃ sont des groupes alkyle tertiaire en C₄-C₅.

4. Composition selon la revendication 3, caractérisée en ce que n est égal à 0 et R₂ est un atome d'hydrogène.

5. Composition selon la revendication 3, caractérisée en ce que ledit dérivé d'éther a la formule: 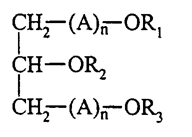 dans laquelle R₂ est un atome d'hydrogène, n est un nombre de 4 à 10 et A est le groupe

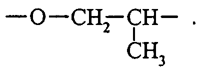

6. Composition selon la revendication 3, la revendication 4 ou la revendication 5, caractérisée en ce que R₁ et R₃ sont des groupes tert-butyle.

7. Composition selon l'une quelconque des revendications 2 à 6, comprenant en outre un polyoxyalkylèneglycol ayant une masse molaire comprise entre 200 et 1 000.

8. Composition selon l'une quelconque des revendications 2 à 6, comprenant en outre un additif ayant la formule:
RO-(AO)ₙ-H
dans laquelle R est un groupe alkyle en C₁-C₇ ou cycloalkyle en C₅-C₆, A est un radical alkylène en C₂-C₃ et n est un nombre de 1 à 10.

9. Composition selon l'une quelconque des revendications 2 à 8, contenant aussi un additif classique du ciment choisi parmi des agents accélérant le durcissement, des agents retardant le durcissement, des inhibiteurs de corrosion de l'acier d'armature, des agents de réduction de l'eau, des entraîneurs d'air, et des superplastifiants.

10. Composition selon l'une quelconque des revendications 2 à 9, contenant aussi de l'eau comme agent de durcissement.

11. Composition selon l'une quelconque des revendications 2 à 10, contenant un granulat.

12. Composition selon l'une quelconque des revendications 2 à 11, contenant aussi un monoalcool aliphatique en C₄-C₆.

13. Composition selon l'une quelconque des revendications 2 à 12, contenant aussi un additif de type ester d'acide gras.
